# EUROPÄISCHE PATENTANMELDUNG

(11) **EP 4 414 093 A1**
(43) Veröffentlichungstag der Anmeldung: **14.08.2024**
(21) Anmeldenummer: 23020072.7
(22) Anmeldetag: 09.02.2023
(51) Int. Cl.: B09B 3/40, F23G 5/48, F23G 5/50, F23G 7/10, F23L 7/00

(54) **VERFAHREN UND ANLAGE ZUR THERMISCHEN BEARBEITUNG EINES ABFALLS**

(71) Anmelder: Linde GmbH, 82049 Pullach (DE)
(72) Erfinder: Bokker, Fokke, 82049 Pullach (DE)
(74) Vertreter: Lu, Jing

(57) **Zusammenfassung**

Die Erfindung betrifft ein Verfahren (100, 200) zur thermischen Bearbeitung (110) eines zumindest Kohlenstoff und Wasserstoff sowie zumindest ein weiteres chemisches Element aus der Gruppe der Metalle und/oder aus der Gruppe der Halogene und/oder aus der Gruppe der Halbmetalle enthaltenden Abfalls (10), wobei die thermische Bearbeitung (110) eine zumindest teilweise Verbrennung des Abfalls (10) umfasst, dadurch gekennzeichnet, dass eine (lokale) Temperatur der thermischen Bearbeitung (110) durch Zugabe einer definierbaren Wassermenge (20) zu dem Abfall (10) auf eine Temperatur innerhalb eines Zieltemperaturbereichs eingestellt wird, wobei die zugegebene Wassermenge (20) zumindest teilweise mit dem Abfall (10) stromauf der thermischen Bearbeitung (110) vermischt wird. Ferner wird eine Anlage zur Durchführung eines solchen Verfahrens vorgeschlagen.

## Beschreibung

Die Erfindung betrifft ein Verfahren sowie eine Anlage zur thermischen Bearbeitung eines Abfalls, der zumindest Kohlenstoff, Wasserstoff und ein weiteres chemisches Element aus der Gruppe der Metalle und/oder aus der Gruppe der Halbmetalle und/oder aus der Gruppe der Halogene umfasst.

### Technologischer Hintergrund der Erfindung

Typische Anlagen zur thermischen Behandlung von wasserhaltigen organischen Abfällen, die auch Metallsalze enthalten, weisen eine mehrschichtige Auskleidung auf. Eine innere, dichte und wenig poröse Schicht der Auskleidung (der Verbrennungskammer zugewandt) hat typischerweise schlechte thermische Isolationseigenschaften, ist dafür aber sehr resistent gegenüber chemischen und physikalischen Beanspruchungen durch Salzschmelzen. Eine zweite, äußere (das heißt vom Brennraum abgewandte) Schicht ist dagegen für die notwendige thermische Isolierung vorgesehen. Diese ist empfindlich gegenüber chemischen und physikalischen Belastungen, was allerdings in vielen Fällen unproblematisch ist, da sie keinen direkten Kontakt mit den in der Brennkammer befindlichen Stoffen hat.

Bei der thermischen Verwertung von Abfällen mit hohem Energieinhalt treten typischerweise auch hohe Verbrennungstemperaturen auf, die die in dem Abfall befindlichen Salze teilweise zum Zerfall bzw. in die Gasphase bringen. Dadurch kann die innere Schicht der Auskleidung durch diffundierende Salzspezies durchdrungen werden und die äußere Schicht angreifen. Um dies zu verhindern sind verbesserte Verfahren zur thermischen Bearbeitung von salzhaltigen Abfällen erwünscht.

### Offenbarung der Erfindung

Diese Aufgabe wird durch ein Verfahren und eine Anlage gemäß dem jeweiligen unabhängigen Patentanspruch gelöst.

Ein erfindungsgemäßes Verfahren zur thermischen Bearbeitung eines zumindest Kohlenstoff und Wasserstoff sowie zumindest ein weiteres chemisches Element aus der Gruppe der Metalle und/oder aus der Gruppe der Halogene und/oder aus der Gruppe der Halbmetalle enthaltenden Abfalls, wobei die thermische Bearbeitung eine zumindest teilweise Verbrennung des Abfalls umfasst, ist dadurch gekennzeichnet, dass eine Temperatur der thermischen Bearbeitung durch Zugabe einer definierbaren Wassermenge zu dem Abfall auf eine Temperatur innerhalb eines Zieltemperaturbereichs eingestellt wird. Durch die gezielte Einstellung des Zieltemperaturbereichs kann eine Schädigung einer Auskleidung eines Reaktions- bzw. Brennraumes, in dem die thermische Bearbeitung (z.B. eine Verbrennung) durchgeführt wird, vermieden werden und gleichzeitig eine möglichst vollständige Reaktion sichergestellt werden. Erfindungsgemäß wird die zugegebene Wassermenge zumindest teilweise mit dem Abfall stromauf der thermischen Bearbeitung vermischt. Ein weiterer Anteil der zugegebenen Wassermenge kann während der thermischen Bearbeitung zugegeben, insbesondere eingespritzt, werden. Dadurch ergeben sich flexible und effektive Eingriffsmöglichkeiten, die eine präzise Steuerung ermöglichen.

Durch die Beimischung der zur Temperatureinstellung erforderlichen Wassermenge bereits in den Abfallstrom vor dessen Eintritt in die thermische Bearbeitung, kann eine drohende (auch nur lokale) Überschreitung der zulässigen bzw. akzeptablen Höchsttemperatur bereits im Vorhinein wirksam entgegengetreten werden. Dabei kann insbesondere eine lokale Temperaturüberschreitung an der Stelle bzw. den Stellen, an denen der Abfallstrom in die Brennkammer gelangt (sog. Eindüsestelle(n)), vermieden werden.

Das zumindest eine weitere chemische Element liegt insbesondere in Form zumindest eines Salzes und/oder zumindest einer metallorganischen Verbindung von einem oder mehreren Schwer- und/oder Alkali- und/oder Erdalkalimetallen, insbesondere in Form eines Salzes aus zumindest einem Kation eines oder mehrerer der Gruppe Lithium, Kalium, Natrium, Kalium, Calcium und Magnesium mit zumindest einem Anion aus der Gruppe aus Hydroxid, Chlorid, Fluorid, Bromid, lodid, Sulphid, Sulphit, Sulfat, Phosphat, Carbonat, Cyanid und Nitrat und/oder in Form eines Salzes aus einem oder mehreren Alkali- und/oder Erdalkalimetallionen mit organischen Anionen, insbesondere aus der Gruppe von Alkoholat-, Zucker- und Carbonsäureanionen und/oder in Form eines Schwermetall-Komplex-Salzes, insbesondere eines Komplex-Katalysator-Salzes, in dem Abfall vor. Dies sind besonders relevante Salzspezies, die in einer Vielzahl unterschiedlicher Abfälle, insbesondere in Abfällen der chemischen Industrie, vorkommen können.

Der Zieltemperaturbereich wird bevorzugt in Abhängigkeit von einer Identität und/oder einem relativen Anteil des zumindest einen weiteren chemischen Elements gewählt. Dadurch kann gezielt eine hohe Diffusionsrate, die für unterschiedliche Ionen eine unterschiedliche Temperaturabhängigkeit aufweist, vermieden werden und gleichzeitig eine hohe Verbrennungseffizienz sichergestellt werden.

Der Zieltemperaturbereich wird vorteilhafterweise so gewählt, dass ein Anteil des zumindest einen weiteren chemischen Elements in gasförmigem Zustand während der thermischen Bearbeitung einen vorbestimmbaren Maximalwert nicht überschreitet. Damit kann präzise eine unschädliche Belastung der Auskleidung realisiert werden.

Dabei wird der Maximalwert bevorzugt so festgelegt, dass der Anteil des zumindest einen weiteren chemischen Elements in gasförmigem Zustand an einer gesamten Gasphase während der thermischen Bearbeitung höchstens 1ppm, 3ppm, 10ppm, 30ppm, 100ppm, 300ppm, 1000ppm, 3000ppm, 1% oder 3%, jeweils bezogen auf die Stoffmenge, die Masse oder das Volumen, beträgt. Dies sind typischerweise Konzentrationen, bei denen die Isolierschicht der Auskleidung noch keine relevante Beeinträchtigung erfährt.

Insbesondere wird der Zieltemperaturbereich so gewählt, dass ein Vollständigkeitsmaß der zumindest teilweisen Verbrennung des Abfalls einen vorbestimmbaren Mindestwert nicht unterschreitet. Dadurch wird der Erfolg der thermischen Bearbeitung sichergestellt.

Dabei wird der Mindestwert bevorzugt so festgelegt, dass eine Zusammensetzung eines Produktgemischs der thermischen Bearbeitung um höchstens 1%, 3%, 10% oder 30% von einer Zusammensetzung abweicht, die dem thermodynamischen Gleichgewicht entspricht. So kann eine mindestens erforderliche Umsatzrate bzw. Verbrennungseffizienz eingestellt werden.

Eine Temperatur wird vorteilhafterweise während der thermischen Bearbeitung und/oder stromab der thermischen Bearbeitung ermittelt und die zugegebene Wassermenge in Abhängigkeit von der ermittelten Temperatur bestimmt. Damit lässt sich eine präzise Steuerung realisieren.

Vorteilhafterweise werden ein Anteil des zumindest einen weiteren chemischen Elements und/oder einer chemischen Verbindung an dem Abfall und/oder eine andere Eigenschaft des Abfalls, beispielsweise ein Heizwert, stromauf der thermischen Bearbeitung ermittelt und die zugegebene Wassermenge in Abhängigkeit von dem ermittelten Anteil des zumindest einen weiteren chemischen Elements bzw. der chemischen Verbindung bzw. in Abhängigkeit von der anderen Eigenschaft bestimmt. So kann die Temperatursteuerung und damit eine energetische Effizienz des Verfahrens optimiert werden, da nur die tatsächlich notwendige Kühlleistung durch Wasserzugabe aufgebracht wird.

Insbesondere wird dabei der Anteil des zumindest einen weiteren chemischen Elements und/oder der chemischen Verbindung und/oder die andere Eigenschaft auf Basis eines oder mehrerer Indikatoren aus der Gruppe der elektrischen Leitfähigkeit, des pH-Werts, der Dichte und der Trübung des Abfalls ermittelt. Diese (indirekten) Indikatoren lassen sich vergleichsweise einfach ermitteln und geben in vielen Anwendungsfällen ausreichend präzise die andere Eigenschaft bzw. die Zusammensetzung des Abfalls in Hinblick auf das zumindest eine weitere chemische Element bzw. die chemische Verbindung wieder.

Der Zieltemperaturbereich wird bevorzugt aus einem Temperaturbereich zwischen 500 und 1500 °C, insbesondere zwischen 700 und 1300 °C, besonders bevorzugt zwischen 850 und 1200 °C, gewählt. Dies sind Temperaturbereiche, in denen die meisten relevanten Salzspezies in ausreichend kondensierter Form vorliegen und bei denen gleichzeitig die thermische Bearbeitung effizient ablaufen kann.

Eine erfindungsgemäße Anlage zur thermischen Bearbeitung eines zumindest Kohlenstoff und Wasserstoff sowie zumindest ein weiteres chemisches Element aus der Gruppe der Metalle und/oder aus der Gruppe der Halogene und/oder aus der Gruppe der Halbmetalle enthaltenden Abfalls, ist zur zumindest teilweisen Verbrennung des Abfalls eingerichtet, und umfasst eine Wasserdosiereinheit, sowie Sensorik und eine Recheneinheit, die die Anlage dazu ertüchtigen, eine Temperatur der thermischen Bearbeitung durch Zugabe einer definierbaren Wassermenge zu dem Abfall auf eine Temperatur innerhalb eines Zieltemperaturbereichs einzustellen. Insbesondere ist die Anlage zur Durchführung eines wie vorstehend beschriebenen Verfahrens eingerichtet. Damit profitiert die Anlage von den gleichen Vorteilen wie das soeben erläuterte Verfahren.

Im Folgenden werden weitere Merkmale und Vorteile der Erfindung unter Bezugnahme auf die beigefügte Zeichnung näher erläutert. Dabei gelten Ausführungen bezüglich einer Anlagenkomponente sinngemäß entsprechend für in dieser Anlagenkomponente durchgeführte Verfahrensschritte und umgekehrt. Bezugnahmen auf eine Anlagenkomponente sind daher auch als Bezugnahmen auf einen entsprechenden Verfahrensschritt zu verstehen und umgekehrt.

### Kurzbeschreibung der Figuren

Figur 1 zeigt eine vorteilhafte Ausgestaltung einer erfindungsgemäßen Anlage in Form eines vereinfachten Blockdiagramms.
Figur 2 zeigt eine weitere vorteilhafte Ausgestaltung einer erfindungsgemäßen Anlage in Form eines vereinfachten Blockdiagramms.

### Ausgestaltungen der Erfindung

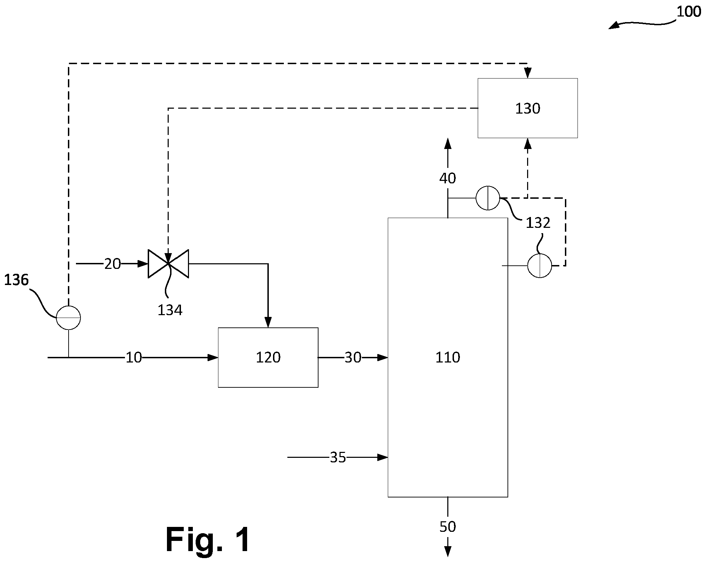

In Figur 1 ist eine vorteilhafte Ausgestaltung einer erfindungsgemäßen Anlage in Form eines vereinfachten Blockdiagramms gezeigt und insgesamt mit 100 bezeichnet.

Die Anlage 100 weist einen Brennraum 110 auf, dem ein Strom 30 zugeführt wird. Der Strom 30 wird in dem gezeigten Beispiel in einem Mischer 120 erzeugt, in dem ein Abfallstrom 10, der zumindest Kohlenstoff und Wasserstoff (z.B. in Form von Kohlewasserstoffverbindungen, Biomasse, organischen Lösungsmitteln o.Ä.) sowie zumindest ein weiteres chemisches Element, insbesondere in Form eines oder mehrerer Metallsalze, enthält, und Wasser 20 miteinander vermischt werden.

Ein Ventil 134 wird zur Steuerung der in den Mixer 120 eingespeisten Menge an Wasser 20 verwendet. Das Ventil wird von einer Recheneinheit 130 angesteuert, die Temperaturdaten von einem Temperatursensor 132 empfängt, der eine Temperatur innerhalb der Brennkammer oder stromab der Brennkammer 110, beispielsweise in einem Abgasstrom 40, der aus der Brennkammer 110 ausgestoßen wird, erfasst. Die Recheneinheit 130 errechnet auf Basis der empfangenen Temperaturdaten eine zur Einstellung eines vorgegebenen Temperaturbereichs erforderliche Wassermenge und steuert das Ventil 134 so an, dass die entsprechende Menge an Wasser 20 das Ventil 134 in Richtung des Mixers 120 passiert.

Insbesondere kann es sich bei dem Abfallstrom 10 um einen zumindest teilweise aus flüssigen Abfällen bestehenden Strom handeln. Ggf. können auch feste und/oder gasförmige Komponenten in dem Abfallstrom 10 enthalten sein. Diese Angaben beziehen sich insbesondere auf Standardbedingungen (z.B. 0-25 °C, 80-120 kPa). Salze, beispielsweise Schwer-, Alkali- und/oder Erdalkalimetallsalze, können in dem Abfallstrom gelöst sein oder in diesem in dispergierter oder anderweitig heterogen verteilter Form enthalten sein.

Zur thermischen Bearbeitung bzw. Verbrennung des Stroms 30 ist neben dem Strom 30 insbesondere auch Luft oder ein anderes Oxidationsmittel erforderlich oder zumindest vorteilhaft. Daher kann in den Brennraum ein Oxidationsmittelstrom 35, insbesondere atmospherische Luft, synthetische Luft, Sauerstoff oder andere Sauerstoff enthaltende Gemische, eingeleitet werden. Bei der Verbrennung 110 anfallende nicht verbrennbare Rückstände wie Asche, Salze, Salzschmelzen o.Ä. können als Schlackestrom 50 dem Brennraum entnommen werden und ggf. einer weiteren Verwertung zugeführt werden. Je nach Art der in dem Abfallstrom 10 enthaltenen Salze kann der Schlackestrom wertvolle Stoffe, insbesondere Metalle, enthalten, die es sich lohnt, zurückzugewinnen.

In dem gezeigten Beispiel umfasst die Anlage einen Sensor 136, der chemische Daten des Abfallstroms 10 erfasst und an die Recheneinheit 130 sendet. Diese kann die chemischen Daten bei der Berechnung der erforderlichen Wassermenge berücksichtigen. Beispielsweise kann aus den chemischen Daten ein Energieinhalt (z.B. Brenn- oder Heizwert) des Abfallstroms 10 und/oder eine Konzentration und/oder Identität darin enthaltener Salze bzw. deren Bestandteile abgeleitet werden. Generell wird die Temperatur im Brennraum 110 von dem Energieinhalt des Abfallstroms bestimmt, so dass bei hohem Energieinhalt mehr Wasser 20 zu dem Mischer 120 zugeleitet werden kann, um die Brenntemperatur in dem Zieltemperaturbereich zu halten. Die Konzentration und/oder Zusammensetzung der Salze in dem Abfallstrom beeinflusst hingegen insbesondere die Lage und/oder Ausdehnung des Zieltemperaturbereichs, so dass beispielsweise bei hohen Konzentrationen eine niedrigere Maximaltemperatur als obere Grenze des Zieltemperaturbereichs gewählt werden kann als bei niedrigen Konzentrationen. Zudem kann bei Vorhandensein von Ionen mit niedriger Verdampfungstemperatur bzw. hohem Dampfdruck (z.B. Lithiumionen) eine niedrigere Maximaltemperatur gewählt werden, als bei Abwesenheit solcher Ionen. Sind beispielsweise nur Schwermetallionen in dem Abfallstrom enthalten, die typischerweise einen niedrigen Dampfdruck bzw. eine hohe Verdampfungstemperatur aufweisen, kann eine hohe Maximaltemperatur gewählt werden.

Die Mindesttemperatur (also die untere Grenze des Zieltemperaturbereichs) kann z.B. immer gleich gewählt werden oder in Abhängigkeit von der jeweils gewählten Maximaltemperatur veränderlich sein. Auch eine Anpassung der Mindesttemperatur an den Energieinhalt des Abfallstroms 10 oder die Zusammensetzung in Bezug auf die Identität von Kohlestoff und Wasserstoff enthaltenden Verbindungen kann vorteilhaft sein.

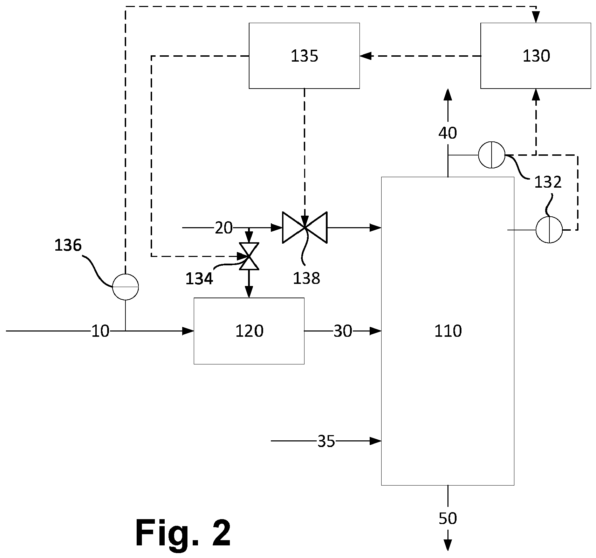

In Figur 2 ist eine weitere vorteilhafte Ausgestaltung einer erfindungsgemäßen Anlage in Form eines vereinfachten Blockdiagramms gezeigt und insgesamt mit 200 bezeichnet.

Die Anlage 200 ist in großen Teilen identisch mit der Anlage 100, so dass auf die obigen Ausführungen verwiesen sei. Ein entscheidender Unterschied besteht jedoch in der Steuerung der Wasserzufuhr. Je nach Zusammensetzung des Abfallstroms 10 kann es schwierig sein, Wasser 20 und den Abfallstrom 10 miteinander zu vermischen (120). Um dennoch eine für die Temperatursteuerung (130) ausreichende Wassermenge in den Brennraum einbringen zu können, wird in dem gezeigten Beispiel eine direkte Wassereinbringung in den Brennraum 110 vorgesehen. Dazu wird ein weiteres Ventil 138 in den Wasserpfad geschaltet, das ebenfalls von der Recheneinheit 130 angesteuert wird.

Die Aufteilung der von der Recheneinheit ermittelten erforderlichen Wassermenge erfolgt unter Verwendung einer Kontrolleinheit 135, die in die Recheneinheit 130 integriert oder, wie in dem dargestellten Beispiel gezeigt, separat bereitgestellt werden kann. Jedenfalls wird die Kontrolleinheit 135 von der Recheneinheit 130 mit Daten versorgt, insbesondere mit einer ermittelten erforderlichen Wassermenge und/oder mit den chemischen Daten. Die Kontrolleinheit 135 kann beispielsweise die chemischen Daten (136) nutzen, um eine geeignete Aufteilung der ermittelten Wassermenge einzustellen. Mit anderen Worten werden die Ventilstellungen (134, 138) von der ermittelten Wassermenge (von der Recheneinheit 130) und der Aufteilung (von der Kontrolleinheit 135) bestimmt. Dabei kann beispielsweise ein umso größerer Anteil der Wassermenge direkt (138) in die Brennkammer eingebracht werden, je geringer der Heizwert (bzw. je geringer der Anteil an brennbaren Stoffen) des Abfallstroms ist. Auch die Salzkonzentration bzw. ein auf die Salzkonzentration in dem Abfallstrom hindeutender Indikator (z.B. elektrische Leitfähigkeit o.Ä.) kann als Kriterium für die Aufteilung der Wassermenge herangezogen werden, wobei beispielsweise ein umso höherer Anteil der Wassermenge 20 in dem Mixer 120 zu dem Abfallstrom 10 gemischt werden kann, je höher die Salzkonzentration in dem Abfallstrom 10 ist.

Ein Beispiel für die Wasserbeimischung direkt zu dem Abfallstrom kann der folgenden Tabelle entnommen werden. Dabei ist erkennbar, dass, wie bereits erwähnt, ein umso höherer Wasseranteil zu dem Abfallstrom stromauf der Brennkammer beigemischt wird, je höher der Heizwert des entsprechenden Abfallstroms ist (hier beispielhaft in Form des brennbaren Methanols dargestellt):

| | | | | |
|---|---|---|---|---|
| Zusammensetzung des Abfallstroms 10 | Gew% (NaCl) | 5 | 5 | 5 |
| | Gew% (H2O) | 0 | 25 | 65 |
| | Gew% (Methanol) | 95 | 70 | 30 |
| Wasserbeimischung direkt zum Abfallstrom | Faktor zum Abfallstrom (kg/kg Abfall) | 2,5 | 0,64 | 0,06 |

## Patentansprüche

1. Verfahren (100, 200) zur thermischen Bearbeitung (110) eines zumindest Kohlenstoff und Wasserstoff sowie zumindest ein weiteres chemisches Element aus der Gruppe der Metalle und/oder aus der Gruppe der Halogene und/oder aus der Gruppe der Halbmetalle enthaltenden Abfalls (10),
wobei die thermische Bearbeitung (110) eine zumindest teilweise Verbrennung des Abfalls (10) umfasst,
**dadurch gekennzeichnet, dass**
eine, insbesondere lokale, Temperatur der thermischen Bearbeitung (110) durch Zugabe einer definierbaren Wassermenge (20) zu dem Abfall (10) auf eine Temperatur innerhalb eines Zieltemperaturbereichs eingestellt wird, wobei die zugegebene Wassermenge (20) zumindest teilweise mit dem Abfall (10) stromauf der thermischen Bearbeitung (110) vermischt wird.

2. Verfahren (100, 200) nach Anspruch 1, wobei das zumindest eine weitere chemische Element in Form zumindest eines Salzes und/oder zumindest einer metallorganischen Verbindung von Schwer- und/oder Alkali- und/oder Erdalkalimetallen, insbesondere
in Form eines Salzes aus zumindest einem Kation eines oder mehrerer der Gruppe Lithium, Kalium, Natrium, Kalium, Calcium und Magnesium mit zumindest einem Anion aus der Gruppe aus Hydroxid, Chlorid, Fluorid, Bromid, lodid, Sulphid, Sulphit, Sulfat, Phosphat, Carbonat, Cyanid und Nitrat und/oder in Form eines Salzes aus einem oder mehreren Alkali- und/oder Erdalkalimetallionen mit organischen Anionen, insbesondere aus der Gruppe von Alkoholat-, Zucker- und Carbonsäureanionen und/oder in Form eines Schwermetall-Komplex-Salzes, insbesondere eines Komplex-Katalysator-Salzes
in dem Abfall (10) vorliegt.

3. Verfahren (100, 200) nach Anspruch 1 oder 2, wobei der Zieltemperaturbereich in Abhängigkeit von einer Identität und/oder einem relativen Anteil des zumindest einen weiteren chemischen Elements gewählt wird.

4. Verfahren (100, 200) nach Anspruch 3, wobei der Zieltemperaturbereich so gewählt wird, dass ein Anteil des zumindest einen weiteren chemischen Elements in gasförmigem Zustand während der thermischen Bearbeitung (110) einen vorbestimmbaren Maximalwert nicht überschreitet.

5. Verfahren (100, 200) nach Anspruch 4, wobei der Maximalwert so festgelegt wird, dass der Anteil des zumindest einen weiteren chemischen Elements in gasförmigem Zustand an einer gesamten Gasphase während der thermischen Bearbeitung (110) höchstens 1ppm, 3ppm, 10ppm, 30ppm, 100ppm, 300ppm, 1000ppm, 3000ppm, 1% oder 3%, jeweils bezogen auf die Stoffmenge, die Masse oder das Volumen, beträgt.

6. Verfahren (100, 200) nach einem der vorstehenden Ansprüche, wobei der Zieltemperaturbereich so gewählt wird, dass ein Vollständigkeitsmaß der zumindest teilweisen Verbrennung des Abfalls (10) einen vorbestimmbaren Mindestwert nicht unterschreitet.

7. Verfahren (100, 200) nach Anspruch 6, wobei der Mindestwert so festgelegt wird, dass eine Zusammensetzung eines Produktgemischs (40, 50) der thermischen Bearbeitung (110) um höchstens 1%, 3%, 10% oder 30% von einer Zusammensetzung abweicht, die dem thermodynamischen Gleichgewicht entspricht.

8. Verfahren (100, 200) nach einem der vorstehenden Ansprüche, wobei eine Temperatur während der thermischen Bearbeitung (110) und/oder stromab der thermischen Bearbeitung ermittelt (132) und die zugegebene Wassermenge (20) in Abhängigkeit von der ermittelten Temperatur (132) bestimmt (134, 138) wird.

9. Verfahren (100, 200) nach einem der vorstehenden Ansprüche, wobei ein Anteil des zumindest einen weiteren chemischen Elements und/oder einer chemischen Verbindung an dem Abfall und/oder eine andere Eigenschaft des Abfalls, insbesondere ein Heizwert, stromauf der thermischen Bearbeitung (110) ermittelt werden (136) und die zugegebene Wassermenge (20) in Abhängigkeit von dem ermittelten Anteil (136) des zumindest einen weiteren chemischen Elements bzw. der chemischen Verbindung bzw. in Abhängigkeit von der anderen Eigenschaft bestimmt (134, 138) wird.

10. Verfahren nach Anspruch 9, wobei der Anteil des zumindest einen weiteren chemischen Elements und/oder der chemischen Verbindung und/oder die andere Eigenschaft auf Basis eines oder mehrerer Indikatoren aus der Gruppe der elektrischen Leitfähigkeit, des pH-Werts, der Dichte und der Trübung des Abfalls (10) ermittelt (136) werden.

11. Verfahren (200) nach einem der vorstehenden Ansprüche, wobei die zugegebene Wassermenge (20) teilweise während der thermischen Bearbeitung (110) zugegeben (138), insbesondere eingespritzt, wird.

12. Verfahren (100, 200) nach einem der vorstehenden Ansprüche, wobei der Zieltemperaturbereich aus einem Temperaturbereich zwischen 500 und 1500 °C, insbesondere zwischen 700 und 1300 °C, bevorzugt zwischen 850 und 1200 °C gewählt wird.

13. Anlage (100, 200) zur thermischen Bearbeitung (110) eines zumindest Kohlenstoff und Wasserstoff sowie zumindest ein weiteres chemisches Element aus der Gruppe der Metalle und/oder aus der Gruppe der Halogene und/oder aus der Gruppe der Halbmetalle enthaltenden Abfalls (10),
die zur zumindest teilweisen Verbrennung des Abfalls (10) eingerichtet ist,
und die eine Wasserdosiereinheit (134, 138), sowie Sensorik (132, 136) und eine Recheneinheit (130) umfasst, die die Anlage (100, 200) dazu ertüchtigen, eine, insbesondere lokale, Temperatur der thermischen Bearbeitung (110) durch Zugabe einer definierbaren Wassermenge (20) zu dem Abfall (10) vor Eintritt des Abfalls (10) in die thermische Bearbeitung (110) auf eine Temperatur innerhalb eines Zieltemperaturbereichs einzustellen.

14. Anlage (100, 200) nach Anspruch 13, die zur Durchführung eines Verfahrens nach einem der Ansprüche 1 bis 12 eingerichtet ist.
